# EUROPEAN PATENT SPECIFICATION

(11) **EP 4 539 038 B1**
(45) Date of publication and mention of the grant of the patent: **13.05.2026**
(21) Application number: 24205238.9
(22) Date of filing: 08.10.2024
(51) Int. Cl.: G10K 15/02

(54) **ELECTRIC PROPULSION APPARATUS FOR A MOTOR VEHICLE WITH GENERATION OF SOUNDS DEPENDING ON THE OPERATION THEREOF**
ELEKTRISCHE ANTRIEBSVORRICHTUNG FÜR EIN KRAFTFAHRZEUG MIT VON DESSEN BETRIEB ABHÄNGIGER KLANGERZEUGUNG
APPAREIL DE PROPULSION ÉLECTRIQUE POUR UN VÉHICULE AUTOMOBILE AVEC GÉNÉRATION DE SONS EN FONCTION DE SON FONCTIONNEMENT

(30) Priority: 13.10.2023 IT 202300021336
(43) Date of publication of application: 16.04.2025
(73) Proprietor: FERRARI S.p.A., 41100 Modena (IT)
(72) Inventor: LAVACCHIELLI, Gianluca, 41100 MODENA (IT); FERRARA, Davide, 41100 MODENA (IT); PULVIRENTI, Francesco, 41100 MODENA (IT); QUATTROMANI, Gianluca, 41100 MODENA (IT); QUONDAM ANTONIO, Simone, 41100 MODENA (IT)
(74) Representative: Studio Torta S.p.A.

(56) References cited:
- US-A1- 2011 304 445
- US-A1- 2016 101 726
- US-A1- 2021 101 480
- US-A1- 2023 144 723

## Description

### TECHNICAL FIELD

The invention relates to an electric propulsion apparatus for a motor vehicle and, more specifically, the aspect of the sound emission of the apparatus.

### PRIOR ART

Some motor vehicles only use electric motors as propulsion means and, therefore, are commonly called fully electric or, simply, electric vehicles.

During their operation, the electric motors emit sounds normally considered faint or even unpleasant.

In fact, in the field of motor vehicles, the electric motors used are normally those suitable for rotating at relatively high speeds, so as to limit the bulk and weight; as a result, the sounds produced have intensities that become relatively significant in the field of high frequencies.

Thus, the sounds produced overall are perceived by the human ear as unpleasant whistles.

This has a negative impact on the driver since the latter is less engaged in driving, less aware of the operating state of the motor, or even disturbed by the unpleasantness of the sounds.

Therefore, there is a need to improve the quality of the sounds perceived by the driver of an electric vehicle, in particular with the aim of increasing the involvement and awareness of the driver with respect to the operating condition of the motor vehicle.

US2021101480A1 discloses the preamble of claim 1.

One purpose of the invention is to respond to the need identified above, preferably in a simple and reliable way.

### DESCRIPTION OF THE INVENTION

The purpose is achieved with a propulsion apparatus according to claim 1.

The dependent claims define particular embodiments of the invention.

### BRIEF DESCRIPTION OF THE DRAWINGS

Below, embodiments of the invention are described to better understand the same by way of non-limiting examples and with reference to the attached drawings in which:
- Figure 1 is a perspective view of a motor vehicle comprising a propulsion apparatus according to the invention,

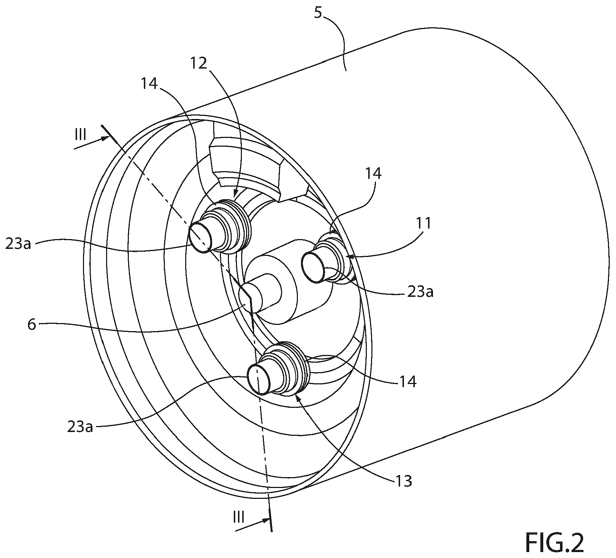

- Figure 2 is a perspective view, on an enlarged scale and with parts removed for clarity, of a portion of the propulsion apparatus,

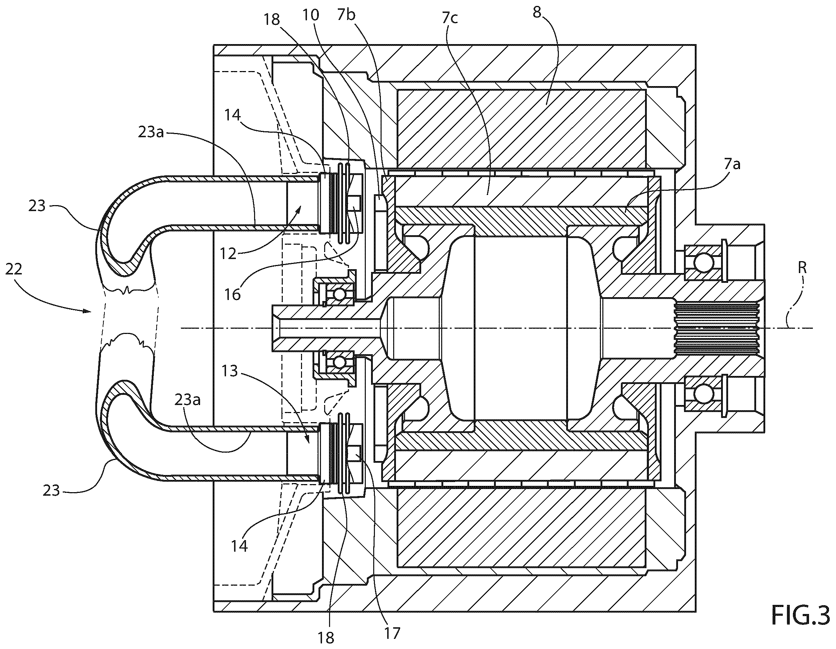

- Figure 3 is a cross section of the propulsion apparatus according to a plane section defined by the line III-III in Figure 2,
- Figures 4, 5 are parts detailing the cross section in Figure 3 and correspond to two respective, distinct operating conditions of the propulsion apparatus,
- Figures 6, 7 are similar to Figures 4, 5, but with some elastic components represented in a schematic form,
- Figure 8 is a diagram of the positioning of some magnets of the propulsion apparatus,
- Figure 9 is a diagram of a variant of the positioning of Figure 8, and
- Figures 10-12 are diagrams of additional variants of the positioning in Figures 8, 9.

### EMBODIMENTS OF THE INVENTION

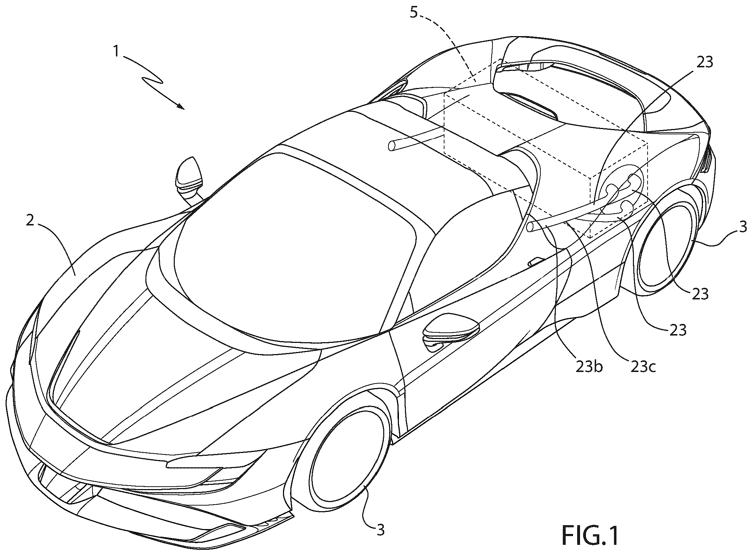

In Figure 1, the reference number 1 is used to indicate, as a whole, a motor vehicle.

Normally, the motor vehicle 1 has a body 2, multiple wheels 3, and a suspension assembly not illustrated and configured to suspend the body 2 with respect to the wheels 3.

The wheels 3 represent known traction means for moving the motor vehicle 1, but for the purposes of the invention they could be replaced by any other suitable means, even unusual ones, like, for example, tracked means.

The motor vehicle 1 also comprises an electric motor 5 for propelling the motor vehicle 1, as well as, in particular, a transmission assembly 6.

The electric motor 5 is, thus, part of a propulsion apparatus of the motor vehicle 1**.**

The electric motor 5 is configured to deliver mechanical power; the transmission assembly 6 is configured to transmit the mechanical power delivered to two of the wheels 3 to move the motor vehicle 1**.**

The transmission assembly 6 could also be configured to transmit the mechanical power to all the wheels 3 or, more generally, to the traction means of the motor vehicle 1**.**

Optionally, the transmission assembly 6 could also have the function of reducing the output speed of the motor 5, thus rotating the wheels 3 at a reduced rotation speed with respect to the output speed of the motor 5.

During the operation of the motor 5, i.e. while the motor 5 delivers mechanical power, the same motor 5 emits a rotating magnetic field.

More specifically, the motor 5 has a rotor 7 and a stator 8 coaxial to each other around a rotor axis R.

Either the stator 8 or the rotor 7 is supplied with electric current, so that a magnetic interaction is created with magnetic elements of the other, either the stator 8 or the rotor 7.

The magnetic interaction corresponds to the rotating magnetic field, which is the cause of a rotation of the rotor 7 with respect to the stator 8 around the rotor axis R.

The magnetic principles linked to the operation of the electric motors are generally known, so they are not explained in further detail here. In particular, the generation of a rotating magnetic field by an electric motor is an underlying principle of the operation of the electric motor.

The magnetic field generated by the motor 5 rotates around the rotor axis R, i.e., it follows the rotation direction of the rotor 7.

More specifically, the magnetic field develops between two opposite magnetic poles, which are, ideally, connected by a magnetic axis.

Here, the magnetic axis is perpendicular to the rotor axis R and rotates around the latter on a plane perpendicular to the rotor axis R.

From hereon, "magnetic axis" means an axis extending between the two magnetic poles of a magnet or magnetic field.

The rotor 7 extends axially along the axis R between two axial ends 7a, 7b, and has an intermediate portion 7c between the ends 7a, 7b along the axis R.

At least the intermediate portion 7c interacts magnetically with the stator 8 according to a direction that is radial to the axis R. Therefore, the intermediate portion 7c defines a radial magnetic interaction portion of the rotor 7.

The portion 7b is clearly fixed to the intermediate portion 7c.

The rotor 7 preferably comprises a magnet 10, specifically a permanent one, with a magnetic axis radial to the axis R. In other words, the magnet 10 has two opposite magnetic poles along a direction radial to the axis R.

In particular, the magnet 10 is part of the end 7b or is supported by the end 7b in a fixed way with respect to the latter. More specifically, the portion 7b may be defined by the magnet 10.

In the embodiment illustrated, the magnet 10 is part of a disc fixed to the end 7b and with which the rotor 7 axially terminates along the axis R on the side of the end 7b. The magnet 10 may also, optionally, be defined by the disc mentioned above or, more generally, by a body fixed to the end 7b and whereby the rotor 7 axially terminates along the axis R on the side of the end 7b.

As far as regards the magnetic axis of the magnet 10, the latter 10 may instead have, alternatively, a magnetic axis parallel to the axis R and be arranged eccentrically, i.e. radially spaced apart by the axis R, so as to have two magnetic poles of which one is exposed to the end 7a, i.e. axially towards the inside of the motor 5, and the other is exposed in the opposite direction, i.e. axially towards the outside of the motor 5.

In addition, in the latter case, the rotor 7 could preferably comprise another magnet 10 with a magnetic axis parallel to the axis R and arranged, for example, in a position diametrically opposite the preceding magnet 10 and, more precisely, along the same radial direction, i.e. preferably in a position aligned along a straight, radial direction. Here, the additional magnet 10 would have magnetic poles inverted with respect to the preceding magnet 10.

Clearly, the rotor 7 could even comprise multiple magnets 10 with respective magnetic axes parallel to the axis R and arranged, for example, circumferentially distributed, in particular with two magnet 10 halves arranged along respective adjacent circumference halves around the axis R and the poles of one of magnet 10 halves inverted with respect to those of the other half.

In any case, the magnetic field produced by the magnet 10 or by the magnets 10 would, in any case, be a rotating magnetic field, since these magnets 10 would be fixed or incorporated into the rotor 7, and, in any case, a magnetic field emitted by the motor 5 during its operation, since belonging to the motor 5.

For this reason, the magnet 10 may not even be included, so that the rotating magnetic field emitted by the motor 5 would consist of the magnetic field resulting from the magnetic interaction between the rotor 7 and the stator 8.

According to the invention, the propulsion apparatus of the motor vehicle 1 comprises, in addition to the electric motor 5, at least one harmonic oscillator 11.

In this case, the propulsion apparatus also comprises another two harmonic oscillators 12, 13.

Each of the harmonic oscillators 11, 12, 13 comprises at least one corresponding support 14, which could be, for example, fixed to an external casing of the motor 5.

In addition, the harmonic oscillators 11, 12, 13 comprise respective magnets 15, 16, 17, in particular permanent ones, and respective elastic elements 18 that suspend, respectively, the magnets 15, 16, 17 from the supports 14.

Each of the magnets 15, 16, 17 is arranged with respect to the motor 5 so as to have a corresponding magnetic pole exposed to the rotating field emitted by the motor 5.

As previously mentioned, the rotating field emitted by the motor 5 could be or comprise the magnetic field produced by the magnet or magnets 10, the magnetic field produced by the interaction between the rotor 7 and the stator 8, or even a combination of these two magnetic fields.

In more detail, the magnets 15, 16, 17 have respective magnetic axes parallel to the axis R, so that the magnetic poles are turned towards the rotor 7 axially. This does not, however, exclude, in general, that the magnets 15, 16, 17 could have their poles radially turned towards the axis R, i.e. with the magnetic axes radial with respect to the axis R.

Thus, the magnets 15, 16, 17 are arranged opposite the rotor 7 according to the axis R. In other words, the magnets 15, 16, 17 face the magnet 10 or magnets 10 according to the axis R; alternatively or in addition, the magnets 15, 16, 17 could be arranged radially around the rotor 7 or the axis R.

Conveniently, the harmonic oscillators 11, 12, 13 may include respective guiding devices 19 configured to respectively guide the magnets 15, 16, 17 along their magnetic axes or, in detail, parallel to the axis R, or even radially with respect to the axis R, according to alternatives not illustrated.

By means of the elastic elements 18, the magnets 15, 16, 17 oscillate with respect to the supports 14 as a function of the rotating magnetic field to which they are exposed or subject.

In this way, the oscillation of the magnets 15, 16, 17 induces a sound pressure wave. In fact, the vibration of the elastic elements 18 or even the movement of the surrounding air caused by the movement of the magnets 15, 16, 17 vibrates the air, so that the sound pressure wave is generated and propagated through the air.

At least one of the harmonic oscillators 11, 12, 13 preferably has a natural frequency different to that of another of the harmonic oscillators 11, 12, 13. More preferably, the natural frequencies of the harmonic oscillators 11, 12, 13 are all different to each other.

In this way, the frequencies of the sound pressure waves produced by the oscillation of the magnets 15, 16, 17 will all be different to each other, even if subject to an identical rotating magnetic field.

In practice, the harmonic oscillators 11, 12, 13 may be mathematically modelled as having at least respective stiffnesses and masses, of which the natural frequencies are a function. In fact, the natural frequency is defined as the square root of the ratio of stiffness to mass.

Therefore, the masses and/or stiffness of the harmonic oscillators 11, 12, 13 may be respectively different to each other, so that the corresponding natural frequencies are different to each other.

Each of the magnets 15, 16, independently of each other, are substantially arranged in diametrically opposite positions to the magnet 17 with respect to a rotation axis of the rotating magnetic field, here, specifically, coinciding with the rotor axis R**.**

More preferably, the magnets 15, 16 could, advantageously, be arranged in positions aligned along a straight axis, in particular a radial one.

In fact, more generally, "diametrically opposite positions" does not necessarily mean positions aligned along a straight axis, but positions that have at least one angular distance greater than a right angle or, in particular, greater than or equal to 120°, more preferably greater than or equal to 135°.

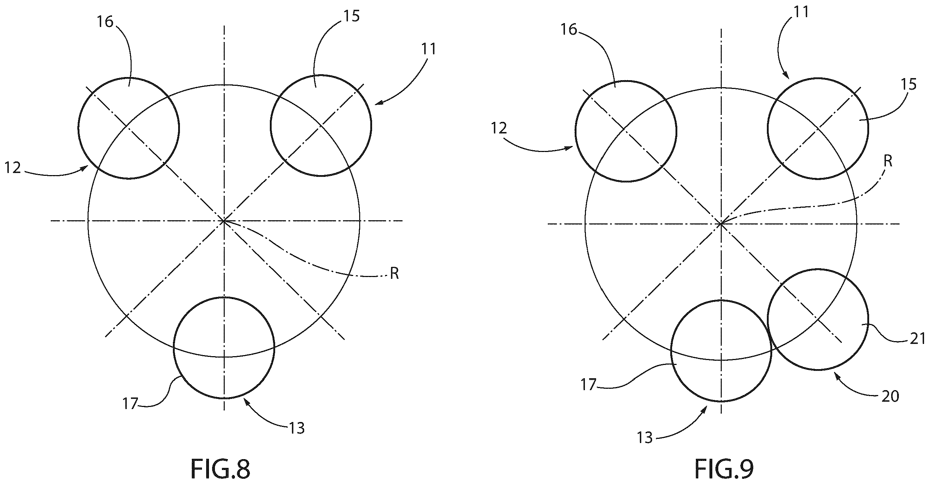

In the variant in Figure 9, the propulsion apparatus comprises an additional harmonic oscillator 20 with its support 14, its elastic element 18, and a magnet 21, which is arranged in a diametrically opposite position to the magnet 16. More precisely, but not necessarily, the magnets 16, 21 are aligned along a straight direction, in particular perpendicular and radial to the axis R**.**

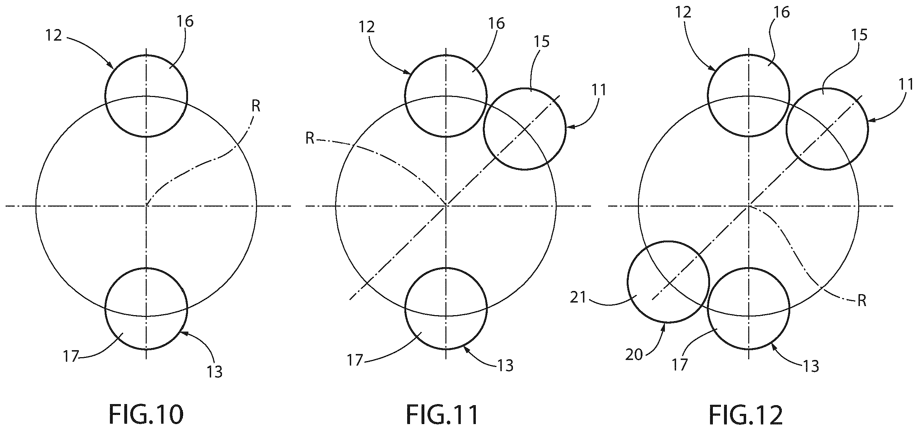

In the variant in Figure 10, the magnets 16, 17 or, more generally, the harmonic oscillators 12, 13 are positioned so they are aligned along a straight direction, in particular perpendicular and radial to the axis R; here, the magnet 15 with the corresponding harmonic oscillator 11 are not included.

The alignment of the magnets 16, 17 is advantageous, since it allows the generation of sound with a periodicity equal to the reciprocal of the time used by the rotor 7 to complete one rotation. Thus, the timing of the generation of the sound substantially follows the operating speed of the motor 5**.**

The variant in Figure 11 is similar to the variant in Figure 10 with the addition of the magnet 15 and corresponding harmonic oscillator 11 at an angular distance closer to the magnet 16, in particular less than 60°. The production of the sound by the harmonic oscillator 11 will have a slight phase delay here with respect to the sound produced by the other two harmonic oscillators 12, 13.

The variant in Figure 12 is similar to the variant in Figure 11 with the addition of the magnet 21 and of the corresponding harmonic oscillator 20 positioned so that it is aligned along a straight direction, in particular perpendicular and radial to the axis R, with respect to the magnet 15 and to the corresponding harmonic oscillator 11.

The magnets 15, 16 preferably have corresponding magnetic poles exposed to the rotating magnetic field (the poles facing the magnet or the magnets 10), which have respective polarities that are equal and opposite with respect to the exposed magnetic pole (that facing the magnet or magnets 10) of the magnet 17 or the magnet 21 in Figures 9 and 12.

In this way, all the magnets 15, 16, 17, 21 will be subject to an attractive force towards the magnet 10 (or the motor 5) or a repulsive force towards the magnet 10 (or the motor 5), based on the rotation of the magnet 10 or the rotating magnetic field of the motor 5.

For example, supposing that the magnets 15, 16 expose the north pole towards the rotating magnetic field, the magnets 17, 21 will expose the south pole towards the same rotating magnetic field. On the other hand, the rotating magnetic field has two opposite magnetic poles so that the north poles of the magnets 15, 16 will face the north or south pole of the rotating magnetic field, so as to be respectively subject to a repulsive or attractive magnetic force, while the south poles of the magnets 17, 21 will face the south or north pole of the rotating magnetic field, so as to also be subject, respectively, to a repulsive or attractive magnetic force. Therefore, all the magnets 15, 16, 17, 21 are attracted to or repulsed by the motor 5.

The speed of the alternation between attraction and repulsion will be determined by the speed of the motor 5 or, more precisely, by the angular speed of the rotor 7.

Therefore, the frequency of the externally applied magnetic force on the harmonic oscillators 11, 12, 13, 20 due precisely to the alternation between attraction and repulsion, will correspond to the rotation frequency of the motor 5 or, more precisely, of the rotor 7.

Thus, the frequency of the sound pressure waves will also be correlated, in particular positively, to the frequency of the externally applied magnetic force and, thus, to the operating state of the motor 5.

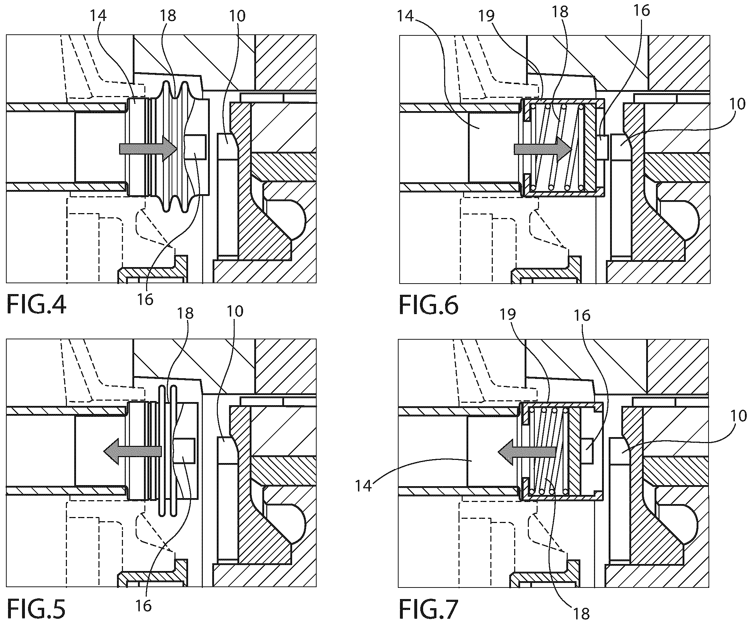

Each of the elastic elements 18 preferably, independently comprises an axially deformable elastic tubular body (here deformable along a direction parallel to the axis R), preferably of the bellows type (Figures 4 and 5) .

This is not, however, necessary, since the elastic elements 18 could comprise any elastic body suitable for enabling the oscillation of the magnets 15, 16, 17. In fact, in Figures 6, 7, the elastic elements 18 are generically represented as springs.

Figures 4 and 6 show the attraction between magnet 16 and magnet 10, while Figures 5, 7 show the repulsion between magnet 16 and magnet 10.

The elastic tubular body is fixed to the corresponding support 14, which has, in particular, a through hole communicating with the inside of the tubular body.

The tubular body has two opposite, axial ends, of which one communicates with the through hole of the support 14 and the other is fixed to its magnet between the magnets 15, 16, 17.

The propulsion apparatus preferably also comprises a sound transmission device 22 configured to transmit the sound pressure waves generated by the harmonic oscillators 11, 12, 13 to a passenger compartment of the motor vehicle 1**.** The passenger compartment is defined by the body 2 and comprises at least one seat for the driver of the motor vehicle 1**.**

In particular, the sound transmission device 22 comprises a plurality of tubes 23 having ends 23a arranged, respectively, at the harmonic oscillators 11, 12, 13, so that the tubes 23 may receive, as input, the sound pressure waves produced by the harmonic oscillators 11, 12, 13.

Furthermore, the tubes 23 extend from the ends 23a until terminating with respective ends 23b, which, in particular, coincide with each other. In fact, the tubes 23 connect with each other to form a single common tube section 23c defined from the connection point until the end 23b.

The end 23b communicates with the passenger compartment, so that, in particular, it leads into the passenger compartment.

Thus, the sound pressure waves are transported to the passenger compartment through the tubes 23.

Alternatively, or in addition, the transmission device 22 could comprise one or more sound boxes along the path of the sound pressure waves towards the passenger compartment. The sound boxes may have the function of conditioning the sound pressure waves, for example, amplifying them and/or conditioning the timbre of the sound associated with these waves.

The transmission device 22 could even, alternatively or in addition, comprise a sound reproduction system.

Such a sound reproduction system could have sound pressure sensors configured to detect the sound pressure waves caused by the harmonic oscillators 11, 12, 13 and to generate corresponding sound signals (for example electric ones), an optional conditioning device configured to condition the sound signals, and a loudspeaker device configured to reproduce a sound corresponding to the sound signals, optionally conditioned.

The sound reproduction system could be combined with sound boxes, in the sense that the sound pressure sensors detect the sound pressure waves amplified or conditioned by the sound boxes.

The sound boxes may also, for example, be integrated with the tubes 23.

The tubular bodies of the elastic elements 18 communicate with the ends 23a, so that the pressure waves that are directly generated inside the tubular bodies pass to the tubes 23.

More specifically, the communication between tubular bodies and tubes 23 occurs via the through holes of the supports 14, to which the tubes 23 are coupled. The ends 23a are fixed to the supports 14, in particular on the side axially opposite the tubular bodies. Thus, in detail, the supports 14 are arranged between the tubular bodies and the tubes 23.

From the above, the advantages of the propulsion apparatus according to the invention are clear.

The harmonic oscillators 11, 12, 13 generate pleasant sounds for low operating conditions of the motor 5, corresponding to a low angular speed of the rotor 7. In fact, the sounds have a low frequency and high intensity, comparable to the sounds produced by a vehicle provided with an internal combustion engine.

The frequency of the sounds, in addition, will increase with the increase in revolutions of the motor, since the frequency of the externally applied magnetic force that causes the oscillation of the magnets 15, 16, 17 increases.

This aspect also clearly recalls what happens with the sounds produced by a conventional internal combustion engine.

The solution adopted is simple, since it does not require complex components, but uses the same magnet operating principles of the electric motor 5**.**

In fact, the solution adopted may basically be applied to any type of electric motor and any type of hybrid or electric vehicle.

The possibility of varying the natural frequencies of the harmonic oscillators 11, 12, 13 guarantees great versatility and the possibility of designing, with great care, the sounds reproduced, which may also have harmonic contributions rich in frequencies, so as to be attractive and pleasant for the driver.

Finally, it is clear that changes may be made to the propulsion apparatus according to the invention, and variations produced thereto, that, in any case, do not depart from the scope of protection defined by the claims.

In particular, the number and shape of the components described and illustrated could be different.

In addition, the variants and embodiments described and illustrated may be combined with each other, without thus departing from the protective scope defined by the claims.

## Claims

1. Propulsion apparatus for a motor vehicle (1), the apparatus comprising
- an electric motor (5) configured to emit a rotating magnetic field during operation, and
**characterized by** comprising
- at least one harmonic oscillator (11, 12, 13) arranged to interact with the rotating magnetic field emitted by the motor (5),
wherein the harmonic oscillator (11, 12, 13) comprises at least one support (14), a first magnet (15, 16, 17, 21) arranged to have a first magnetic pole exposed to the rotating magnetic field emitted by the electric motor (5), and an elastic element (18) suspending the first magnet (15, 16, 17, 21) to the support (14), such that the first magnet (15, 16, 17, 21) oscillates with respect to the support (14) as a function of the rotating magnetic field, thereby inducing a sound pressure wave corresponding to the oscillation of the first magnet (15, 16, 17, 21) and the elastic element (18).

2. The apparatus according to claim 1, wherein the electric motor (5) comprises a rotor (7) and a stator (8) coaxial about a rotor axis (R), the rotor (7) being rotatable with respect to the stator (8) about the rotor axis (R) and comprising a second magnet (10) with a magnetic axis radial with respect to the rotor axis (R), the second magnet (10) being axially facing the first pole according to the rotor axis (R).

3. The apparatus according to claim 2, wherein the rotor (7) comprises a radial magnetic interaction portion (7c) configured to magnetically interact with the stator (8) according to a radial direction with respect to the rotor axis (R) and an axial end portion (7b), according to the rotor axis (R), comprising the or defined by the second magnet (10) and fixed with respect to the radial magnetic interaction portion (7c).

4. The apparatus according to any one of the preceding claims, further comprising an additional harmonic oscillator (11, 12, 13, 20) with a third magnet (15, 16, 17, 21) arranged to have a second magnetic pole exposed to the rotating magnetic field emitted by the electric motor (5).

5. The apparatus according to claim 4, in which the harmonic oscillators (11, 12, 13, 20) have natural frequencies different from each other.

6. The apparatus according to claim 4 or 5, wherein the third magnet (15, 16, 17, 21) is arranged to have a position diametrically opposite to the first magnet (15, 16, 17, 21) with respect to an axis of rotation (R) of the rotating magnetic field, and wherein the second magnetic pole has a magnetic polarity opposite to the first magnetic pole.

7. The apparatus according to any of the preceding claims, comprising sound transmission means (22) configured to transmit the sound pressure wave to a passenger compartment of the motor vehicle (1).

8. The apparatus according to claim 7, wherein the sound transmitting means (22) comprise a tube (23) having a first end (23a) disposed at the harmonic oscillator (11, 12, 13), the tube (23) being configured to extend up to terminate with a further end (23b) to be put in communication with the passenger compartment.

9. The apparatus according to claim 8, wherein the elastic element (18) comprises an axially deformable elastic tubular body, preferably of the bellows type, the tubular body (18) being communicating with and carried by the first end (23a) of the tube (23).

10. Motor vehicle (1) comprising a propulsion apparatus according to any of the preceding claims.

## Patentansprüche

1. Antriebsvorrichtung für ein Kraftfahrzeug (1), wobei die Vorrichtung Folgendes umfasst:
- einen Elektromotor (5), der ausgelegt ist, um während des Betriebs ein rotierendes Magnetfeld auszusenden, und
**dadurch gekennzeichnet, dass** sie Folgendes umfasst:
- mindestens einen harmonischen Oszillator (11, 12, 13), der angeordnet ist, um mit dem von dem Motor (5) ausgesendeten rotierenden Magnetfeld zu interagieren,
wobei der harmonische Oszillator (11, 12, 13) mindestens einen Träger (14), einen ersten Magneten (15, 16, 17, 21), der so angeordnet ist, dass ein erster Magnetpol dem von dem Elektromotor (5) ausgesendeten rotierenden Magnetfeld ausgesetzt ist, und ein elastisches Element (18) umfasst, das den ersten Magneten (15, 16, 17, 21) an dem Träger (14) aufhängt, sodass der erste Magnet (15, 16, 17, 21) abhängig von dem rotierenden Magnetfeld in Bezug auf den Träger (14) schwingt, wodurch eine Schalldruckwelle hervorgerufen wird, die der Schwingung des ersten Magneten (15, 16, 17, 21) und des elastischen Elements (18) entspricht.

2. Vorrichtung nach Anspruch 1, wobei der Elektromotor (5) einen Rotor (7) und einen Stator (8) koaxial um eine Rotorachse (R) umfasst, der Rotor (7) in Bezug auf den Stator (8) um die Rotorachse (R) drehbar ist und einen zweiten Magneten (10) mit einer Magnetachse umfasst, die in Bezug auf die Rotorachse (R) radial verläuft, wobei der zweite Magnet (10) axial dem ersten Pol gemäß der Rotorachse (R) zugewandt ist.

3. Vorrichtung nach Anspruch 2, wobei der Rotor (7) einen radialen Magnetinteraktionsabschnitt (7c) umfasst, der ausgelegt ist, um gemäß einer radialen Richtung in Bezug auf die Rotorachse (R) magnetisch mit dem Stator (8) zu interagieren, und einen axialen Endabschnitt (7b) gemäß der Rotorachse (R), der den zweiten Magneten (10) umfasst oder durch diesen definiert ist und in Bezug auf den radialen Magnetinteraktionsabschnitt (7c) befestigt ist.

4. Vorrichtung nach einem der vorhergehenden Ansprüche, ferner umfassend einen zusätzlichen harmonischen Oszillator (11, 12, 13, 20) mit einem dritten Magneten (15, 16, 17, 21), der so angeordnet ist, dass ein zweiter Magnetpol dem von dem Elektromotor (5) ausgesendeten rotierenden Magnetfeld ausgesetzt ist.

5. Vorrichtung nach Anspruch 4, bei der die harmonischen Oszillatoren (11, 12, 13, 2 0) voneinander verschiedene Eigenfrequenzen aufweisen.

6. Vorrichtung nach Anspruch 4 oder 5, wobei der dritte Magnet (15, 16, 17, 21) so angeordnet ist, dass er eine Position aufweist, die dem ersten Magneten (15, 16, 17, 21) in Bezug auf eine Rotationsachse (R) des rotierenden Magnetfelds diametral entgegengesetzt ist, und wobei der zweite Magnetpol eine magnetische Polarität aufweist, die dem ersten Magnetpol entgegengesetzt ist.

7. Vorrichtung nach einem der vorhergehenden Ansprüche, umfassend Schallübertragungsmittel (22), die ausgelegt sind, um die Schalldruckwelle in einen Insassenraum des Kraftfahrzeugs (1) zu übertragen.

8. Vorrichtung nach Anspruch 7, wobei die Schallübertragungsmittel (22) ein Rohr (23) umfassen, aufweisend ein erstes Ende (23a), das an dem harmonischen Oszillator (11, 12, 13) angeordnet ist, wobei das Rohr (23) ausgelegt ist, um sich nach oben zu erstrecken und mit einem weiteren Ende (23b) zu enden, das mit dem Insassenraum in Kommunikation zu bringen ist.

9. Vorrichtung nach Anspruch 8, wobei das elastische Element (18) einen axial verformbaren, elastischen, rohrförmigen Körper, vorzugsweise vom Balgtyp, umfasst, wobei der rohrförmige Körper (18) mit dem ersten Ende (23a) des Rohrs (23) in Kommunikation steht und von diesem getragen wird.

10. Kraftfahrzeug (1), umfassend eine Antriebsvorrichtung nach einem der vorhergehenden Ansprüche.

## Revendications

1. Appareil de propulsion pour un véhicule automobile (1), l'appareil comprenant
- un moteur électrique (5) configuré pour émettre un champ magnétique rotatif pendant le fonctionnement, et
**caractérisé en ce qu'**il comprend
- au moins un oscillateur harmonique (11, 12, 13) disposé pour interagir avec le champ magnétique rotatif émis par le moteur (5),
l'oscillateur harmonique (11, 12, 13) comprenant au moins un support (14), un premier aimant (15, 16, 17, 21) disposé de manière à avoir un premier pôle magnétique exposé au champ magnétique rotatif émis par le moteur électrique (5), et un élément élastique (18) suspendant le premier aimant (15, 16, 17, 21) au support (14), de manière à ce que le premier aimant (15, 16, 17, 21) oscille par rapport au support (14) en fonction du champ magnétique rotatif, induisant ainsi une onde de pression sonore correspondant à l'oscillation du premier aimant (15, 16, 17, 21) et de l'élément élastique (18).

2. Appareil selon la revendication 1, le moteur électrique (5) comprenant un rotor (7) et un stator (8) coaxiaux autour d'un axe (R) de rotor, le rotor (7) étant rotatif par rapport au stator (8) autour de l'axe (R) de rotor et comprenant un deuxième aimant (10) ayant un axe magnétique radial par rapport à l'axe (R) de rotor, le deuxième aimant (10) faisant face axialement au premier pôle selon l'axe (R) de rotor.

3. Appareil selon la revendication 2, le rotor (7) comprenant une partie d'interaction magnétique radiale (7c) configurée pour interagir magnétiquement avec le stator (8) selon une direction radiale par rapport à l'axe (R) de rotor et une partie d'extrémité axiale (7b), selon l'axe (R) de rotor, comprenant le ou définie par le second aimant (10) et fixée par rapport à la partie d'interaction magnétique radiale (7c).

4. Appareil selon l'une quelconque des revendications précédentes, comprenant en outre un oscillateur harmonique (11, 12, 13, 20) supplémentaire doté d'un troisième aimant (15, 16, 17, 21) disposé de manière à avoir un second pôle magnétique exposé au champ magnétique rotatif émis par le moteur électrique (5).

5. Appareil selon la revendication 4, les oscillateurs harmoniques (11, 12, 13, 2 0) ayant des fréquences naturelles différentes les unes des autres.

6. Appareil selon la revendication 4 ou 5, le troisième aimant (15, 16, 17, 21) étant disposé pour avoir une position diamétralement opposée au premier aimant (15, 16, 17, 21) par rapport à un axe de rotation (R) du champ magnétique rotatif, et le second pôle magnétique ayant une polarité magnétique opposée au premier pôle magnétique.

7. Appareil selon l'une quelconque des revendications précédentes, comprenant un moyen de transmission de son (22) configuré pour transmettre l'onde de pression sonore à un habitacle du véhicule automobile (1).

8. Appareil selon la revendication 7, le moyen de transmission de son (22) comprenant un tube (23) comportant une première extrémité (23a) disposée au niveau de l'oscillateur harmonique (11, 12, 13), le tube (23) étant configuré pour s'étendre jusqu'à se terminer par une extrémité supplémentaire (23b) afin d'être mis en communication avec l'habitacle.

9. Appareil selon la revendication 8, l'élément élastique (18) comprenant un corps tubulaire élastique déformable axialement, de préférence de type soufflet, le corps tubulaire (18) étant en communication avec la première extrémité (23a) du tube (23) et porté par cette dernière.

10. Véhicule automobile (1) comprenant un appareil de propulsion selon l'une quelconque des revendications précédentes.
